# EUROPEAN PATENT SPECIFICATION

(11) **EP 4 460 617 B1**
(45) Date of publication and mention of the grant of the patent: **03.12.2025**
(21) Application number: 22703969.0
(22) Date of filing: 08.01.2022
(51) Int. Cl.: E21B 41/00

(54) **METHOD FOR CARBON DIOXIDE STORAGE IN A SUBTERRANEAN RESERVOIR**
VERFAHREN ZUR KOHLENSTOFFDIOXIDLAGERUNG IN UNTERIRDISCHEN FORMATIONEN
PROCEDE DE STOCKAGE DE DIOXYDE DE CARBONE DANS UN RESERVOIR SOUTERRAIN

(43) Date of publication of application: 13.11.2024
(73) Proprietor: TotalEnergies One Tech, 92400 Courbevoie (FR)
(72) Inventor: DAVIDSEN, Søren Mylius, 2960 Rungsted Kyst (DK)
(74) Representative: Bandpay & Greuter
(86) International application number: PCT/IB2022/000014
(87) International publication number: WO 2023/131808

(56) References cited:
- WO-A1-2014/170466
- US-A1- 2011 013 986
- US-A1- 2011 146 979

## Description

### Technical field

The present invention relates to the field of CO₂ storage, and more specifically to a method for CO₂ storage, the method comprising collecting gas from a subterranean source reservoir and injecting the collected gas into a subterranean receiving reservoir, wherein CO₂ is injected into the subterranean source reservoir. The invention also relates to an installation for CO₂ storage in a subterranean reservoir.

### Technical background

Carbon storage projects often use subterranean formations as storage candidates for CO₂. These subterranean formations may comprise existing depleted oil and/or gas subterranean reservoirs, depleted meaning that the pressure in the subterranean reservoir has diminished to a certain level. CO₂ is stored following CO₂ capture to address the increasing demand for minimizing impacts on climate change.

There is an advantage in using existing subterranean depleted reservoirs as they are already proven to be capable of storing gas/oil for a long time, their storage size is known and they are already penetrated with a number of wells. Re-use of wells and/or surface equipment may be particularly beneficial given that subterranean formations with such reservoirs are often offshore, meaning considerable effort is often involved in providing them with the necessary equipment. However, it is generally difficult to make further use of existing equipment as when the CO₂ is supplied to the subterranean reservoir it can undergo a phase change, resulting in a temperature drop that brings the temperature of the equipment below its original design temperature. This effect of thermal shock may damage the equipment, resulting in a leak in the well. The thermal shock may additionally and/or alternatively create a fracture in the reservoir itself or the formation above the reservoir.

EP 2 622 174 B1 relates to a method and arrangement for introducing a CO₂ composition into a subterranean geological formation for storage of CO₂ therein. The CO₂ composition is initially injected into the formation using a first set of injection parameters at which the CO₂ composition is a supercritical fluid having first viscosity and density values. The injection parameters are then modified such that the CO₂ composition is injected into the formation using at least one second set of injection parameters at which the CO₂ composition is a supercritical fluid having second viscosity and density values that are different from said first viscosity and density values, wherein said injection parameters include the injection temperature, injection pressure and hydrocarbon content of the CO₂ composition.

WO 2012/021810 A2 involves the coupling of CO₂ geological storage with methane and/or heat production (geothermal energy) from geopressured-geothermal aquifers. The production of energy from the extracted brine offsets the cost of capture, pressurization, and injection and the subsequent injection of brine containing carbon dioxide back into the aquifer. Calculations described in the document indicate that this offset would reduce the cost of carbon capture and sequestration (CCS) to a point that CCS could survive in a competitive market environment without subsidies or a price on carbon.

US 2011/0013986 relates to a method for enhancing the storage of carbon dioxide underground.

US2011/0146979 relates to an enhanced oil recovery process that is integrated with a synthesis gas generation process involving capture and recycle of a sour carbon dioxide stream for EOR use.

Within this context, there is still a need to provide a method for storing CO₂ in a subterranean formation in an efficient and cost-effective manner.

### Summary of the invention

It is therefore the object of this invention to provide a method for subterranean CO₂ storage, the method comprising:
- collecting gas from a subterranean source reservoir,
- injecting the collected gas into a subterranean receiving reservoir, wherein CO₂ is injected into the subterranean source reservoir.

According to some embodiments, the subterranean receiving reservoir has an initial pressure between 2 MPa and 7 MPa.

According to some embodiments, the subterranean source reservoir has an initial pressure between 2 MPa and 7 MPa.

According to the invention, the subterranean source reservoir and the subterranean receiving reservoir are the same reservoir.

According to some embodiments, the CO₂ injected into the subterranean source reservoir is in the form of liquid CO₂.

According to some embodiments, the collected gas heats the CO₂ during injection into the subterranean source reservoir.

According to the invention, the collected gas and the CO₂ are mixed to obtain a mixture, and the mixture is then injected into the subterranean source reservoir.

According to some embodiments, the method comprises a step of compressing the collected gas before mixing it with the CO₂.

According to some embodiments, the collected gas comprises hydrocarbons.

According to some embodiments, the subterranean source reservoir and the subterranean receiving reservoir are different reservoirs.

According to some embodiments, the collected gas comprises hydrocarbons and/or CO₂ and/or gas that is not carbon-based.

According to some embodiments, the method comprises, sequentially, injecting CO₂ into the subterranean source reservoir, and then starting to collect gas from the subterranean source reservoir and to inject the collected gas into the subterranean receiving reservoir.

According to some embodiments, the step of injecting CO₂ into the subterranean source reservoir is continued during the steps of collecting gas from the subterranean source reservoir and injecting the collected gas into the subterranean receiving reservoir.

According to some embodiments, the subterranean source reservoir heats the injected CO₂.

According to some embodiments, the method comprises mixing additional CO₂ with the collected gas to obtain a mixture, and injecting the mixture into the subterranean receiving reservoir.

According to some embodiments, the pressure of the subterranean receiving reservoir is lower than the pressure of the subterranean source reservoir, and the pressure of the subterranean source reservoir is greater than 7 MPa, preferably greater than 10 MPa.

In some cases the pressure of the subterranean receiving reservoir can be higher than the pressure of the subterranean source reservoir, this is especially possible when the depth of the receiving reservoir is larger than the depth of the source reservoir.

According to some embodiments, a plurality of subterranean receiving reservoirs are fluidly connected in series, and gas is collected from each subterranean receiving reservoir and injected into the next subterranean receiving reservoir in the series.

According to some embodiments, the subterranean reservoirs are off-shore, and the subterranean source reservoir is closer to the mainland than the subterranean receiving reservoir(s).

According to some embodiments, in a first stage, a first reservoir is used as both the subterranean source reservoir and the subterranean receiving reservoir. In a second stage, the first reservoir is used as the subterranean source reservoir and a second reservoir is used as the subterranean receiving reservoir.

According to some embodiments, the first stage is carried out until the first reservoir reaches a target pressure, and then the second stage is carried out, the target pressure being preferably at or above 7 MPa, or at or above 10 MPa, such as between 10 MPa and 70 MPa.

According to some embodiments, in the first stage: the CO₂ injected into the subterranean source reservoir is in the form of liquid CO₂; and/or the collected gas heats the CO₂ during injection into the subterranean source reservoir; and/or the collected gas and the CO₂ are mixed to obtain a mixture, and the mixture is then injected into the subterranean source reservoir; and/or the method comprises a step of compressing the collected gas before mixing it with the CO₂; and/or the collected gas comprises hydrocarbons. Additionally or alternatively, in the second stage: the collected gas comprises hydrocarbons and/or CO₂ and/or gas that is not carbon-based; and/or the method comprises, sequentially, injecting CO₂ into the subterranean source reservoir, and then starting to collect gas from the subterranean source reservoir and to inject the collected gas into the subterranean receiving reservoir; and/or the step of injecting CO₂ into the subterranean source reservoir is continued during the steps of collecting gas from the subterranean source reservoir and injecting the collected gas into the subterranean receiving reservoir; and/or the subterranean source reservoir heats the injected CO₂; and/or the method comprises mixing additional CO₂ with the collected gas to obtain a mixture, and injecting the mixture into the subterranean receiving reservoir; and/or the pressure of the subterranean receiving reservoir is lower than the pressure of the subterranean source reservoir, and the pressure of the subterranean source reservoir is greater than 7 MPa, preferably greater than 10 MPa; and/or a plurality of subterranean receiving reservoirs are fluidly connected in series, and gas is collected from each subterranean receiving reservoir and injected into the next subterranean receiving reservoir in the series; and/or the subterranean reservoirs are off-shore, and the subterranean source reservoir is closer to the mainland than the subterranean receiving reservoir(s).

Another object of the invention is an installation for CO₂ storage, the installation comprising:
- at least one source injection well in a subterranean source reservoir;
- at least one receiving injection well in a subterranean receiving reservoir;
- at least one production well in a subterranean source reservoir configured for collecting gas;
- a CO₂ feeding line connected to the source injection well, configured for supplying CO₂ to the source injection well;
- a gas transfer line connected from the production well to the receiving injection well, configured for transferring collected gas from the production well to the receiving injection well.

According to the invention, the subterranean source reservoir and the subterranean receiving reservoir are the same reservoir.

According to some embodiments, the source injection well and the receiving injection well are the same injection well.

According to some embodiments, the installation is configured for mixing the collected gas and CO₂ in or upstream of the source injection well.

According to some embodiments, the installation comprises a compressor on the gas transfer line.

According to some embodiments, the subterranean source reservoir and the subterranean receiving reservoir are different reservoirs; and wherein the source injection well is different from the receiving injection well.

According to some embodiments, the installation comprises, in addition to the gas transfer line connected from the production well to the receiving injection well, another gas transfer line connected from the production well to the source injection well, configured for transferring collected gas from the production well to the source injection well.

According to some embodiments, the installation comprises an additional CO₂ feeding line connected to the gas transfer line or to the receiving injection well, the installation being configured for supplying CO₂ mixed with collected gas to the receiving injection well.

According to some embodiments, a plurality of subterranean receiving reservoirs are fluidly connected in series by respective gas transfer lines, each gas transfer line being connected at the outlet of a production well of a subterranean receiving reservoir and at the inlet of an injection well of a next subterranean receiving reservoir in the series.

According to some embodiments, the subterranean reservoirs are off-shore, and the subterranean source reservoir is closer to the mainland than the subterranean receiving reservoir(s).

The present invention makes it possible to address the need mentioned above. In particular, the invention provides a method for CO₂ storage which is efficient and cost-effective.

This is achieved by collecting gas from a subterranean source reservoir and injecting the collected gas into a subterranean receiving reservoir, wherein CO₂ is injected into the subterranean source reservoir.

In some variations, the collected gas heats the CO₂, assisting in the prevention of phase change or the effects of phase change. This minimizes the temperature drop in the injection well, enabling existing equipment to continue to function at the desired operating temperature. In particular, phase change of the CO₂ in the injection well may thus be prevented or limited.

The method may therefore be able to function without the replacement of existing equipment and/or use of an additional heater and/or compressor. This in turn improves the efficiency and cost-effectiveness of storing CO₂.

Advantageously, and according to some embodiments, the collected gas may heat liquid CO₂ to reduce the temperature drop that occurs from liquid phase change to a vapor in the injection well or it may increase the minimum temperature that occurs above the original minimum design temperature. The embodiments may also make use of mixing the collected gas with the liquid CO₂. As the collected gas is of a lower density than that of the liquid CO₂, the density of the mixture is lower than that of the liquid CO₂, resulting in a lower weight and a temperature drop that is even further reduced during injection into the subterranean receiving reservoir.

### Brief description of the drawings

Non-limiting examples will now be described in reference to the accompanying drawings, where:
FIG. 1 shows an illustration of an example of the method according to an embodiment.
FIG. 2 shows a schematic illustration of an example of the method according to the same embodiment as displayed in FIG. 1.
FIG. 3 shows an example of the method according to an embodiment.

### Detailed description

The invention will now be described in more detail without limitation in the following description. The method of the present invention is implemented by collecting gas from a subterranean source reservoir in a subterranean formation and injecting the collected gas into a subterranean receiving reservoir in a subterranean formation, wherein CO₂ is injected into the subterranean source reservoir. The subterranean formation may be offshore or on the mainland, or partly offshore and partly on the mainland.

A *"subterranean reservoir"* refers to a hydrocarbon reservoir within a subterranean formation. This hydrocarbon reservoir may be partly, substantially or fully depleted - *i.e.* the hydrocarbons in the reservoir may have been previously produced at the time the method of the invention is implemented. A reservoir is an underground portion wherein a fluid such as CO₂ or hydrocarbons can be contained without substantially diffusing to neighboring portions. In this respect, the reservoir can be considered as a geological enclosure within a subterranean formation. For example, the neighboring portions may be made of rock material having a lower porosity than the rock material of the reservoir itself. In some variations, a layer of clay may be present above the reservoir. In some variations, a water-containing layer may be present below the reservoir. In some variations, the reservoir may be partly delimited by a crack creating a porosity discontinuity through which a fluid may not easily flow.

The reservoir may be of an elongated shape, with for example, a height of from 20 to 300 m and/or a lateral dimension of from 2 km to 15 km, for example from 3 to 10 km. The reservoir, if positioned offshore, may be found at a depth below sea level that is, for example, greater than 1 km such as from 2 km to 4 km or of such order.

A *"subterranean formation"* is defined in relation to the nature of the rock from which it is formed. A subterranean formation may comprise multiple reservoirs. Reservoirs may belong to different types of subterranean formation, such as but not limited to those of different materials, for example, limestone or sandstone. The reservoirs mentioned herein may belong to a same subterranean formation or to different subterranean formations. In any case, they are separated from each other by a boundary so that fluid may not flow between reservoirs.

The collected gas may be sourced from the same reservoir as the subterranean receiving reservoir, or it may be sourced from another subterranean reservoir.

The subterranean receiving reservoir may have an initial pressure between 2 MPa and 7 MPa and an initial temperature between 70°C and 200°C. The subterranean source reservoir may have an initial reservoir pressure between 2 MPa and 7 MPa and an initial temperature between 70°C and 200°CC.

By *"initial"* it is meant before the method according to the invention is implemented, since the implementation of the method may modify the pressure and temperature within the source and/or subterranean receiving reservoir.

The temperature of the reservoir may decrease with the addition of the injected CO₂ when the method of the invention is implemented, and then may increase again up to its initial value (due to the conditions of the surrounding area of the reservoir). The pressure of the reservoir may increase with the addition of the injected CO₂, when the method of the invention is implemented, optionally up to the pressure value that the reservoir had prior to hydrocarbon depletion, such as, for example, a value lying between 10 MPa and 70 MPa after a filling period of 2 to 20 years, or of such order. Preferably, the injection of CO₂ is stopped when the pressure in the reservoir reaches the pressure value prior to hydrocarbon depletion, in order to avoid damaging the reservoir.

Different embodiments of the present invention are described below. Some embodiments implement the disclosed method using a closed loop, where the subterranean source reservoir and the subterranean receiving reservoir may be the same reservoir.

Other embodiments implement the disclosed method by linking reservoirs, where the subterranean receiving reservoir and the subterranean source reservoir may be different reservoirs.

Other embodiments implement the disclosed method successively using both the closed loop and linked reservoirs.

### Closed Loop

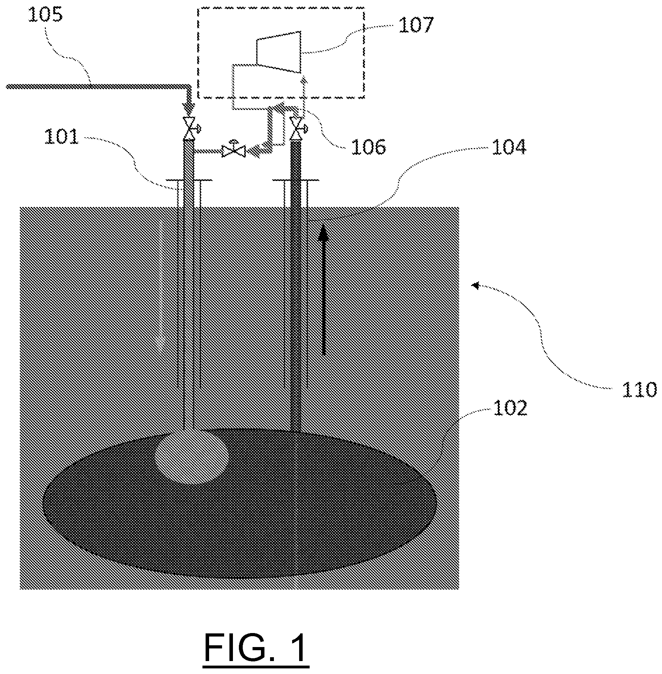

Referring to an embodiment as illustrated in FIG. 1, the subterranean source reservoir and the subterranean receiving reservoir may be the same reservoir 102. One or several production wells 104 may collect gas from the reservoir 102 before providing the gas to a gas transfer line 106 which is fluidically connected to a head of a receiving injection well 101. In this case, the receiving injection well, *i.e.,* injection well in the subterranean receiving reservoir, is also a source injection well, *i.e.,* injection well in the subterranean source reservoir, since the subterranean source reservoir and the subterranean receiving reservoir are the same. The collected gas may comprise hydrocarbons such as, for example, methane, ethane, propane and/or heavier hydrocarbons. The collected gas may also comprise CO₂, H₂S and/or mercaptans. The composition of the collected gas may vary over time since, as will be shown below, additional CO₂ is progressively injected into the reservoir 102. As a result, the proportion of CO₂ in the collected gas may increase over time.

The collected gas may be a natural gas which is a mix of hydrocarbons such as, for example, methane, ethane, and/or propane and/or heavier hydrocarbons. Methane may be, for example, the dominating part of the composition with a value of +75 mol%.

An optional compressor 107 along the gas transfer line 106 may compress the gas before it arrives to the head of the injection well 101.The compressor 107 may apply compression to increase the ratio of hydrocarbons in the injected gas.

Meanwhile, a CO₂ feeding line 105 may also be fluidically connected to the head of the injection well 101. The CO₂ feeding line 105 may thus supply CO₂ to the injection well 101. The supplied CO₂ may preferably be in the form of a liquid or may be in a supercritical state. Preferably, it is in the liquid state.

The collected gas may heat the (preferably liquid) CO₂, and together they may mix to form a mixture. The mixture may be, for example, a two-phase or gas-phase mixture. The quantity of collected gas that mixes with the liquid CO₂ may depend on the characteristics of the reservoir. Mixing may occur in or upstream of the injection well 101. For example, mixing may occur upstream of the head of the injection well 101 and/or at the head of the receiving injection well 101 and/or downstream of the head of the receiving injection well 101. The injection well 101 may then inject the mixture into the reservoir 102.

The mixing may be carried out for example in a static mixer. The preferred mixing ratios may depend on features such as but not limited to, reservoir depth, temperature, pressure, injection rate and/or CO₂ temperature. For example, the amount of collected gas added to the CO₂ may be from 5 wt.% to 30 wt.%, preferably from 10 to 20 wt.%, relative to the CO₂.

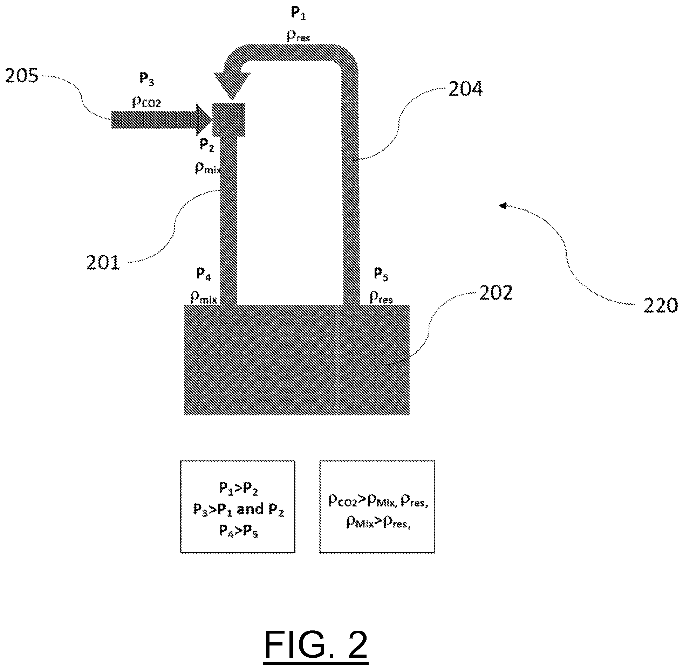

As demonstrated in FIG. 2, when CO₂ is provided in a liquid form, the influx of liquid CO₂ has a higher density ρ_{CO2} than that of the collected gas ρᵣₑₛ. The influx of liquid CO₂ will be of a higher pressure P₃ than that of the collected gas P₁. In view of the relatively high value P₃ compared with the pressure P₄ at the outlet of the injection well, the liquid CO₂ tends to fall at a rate faster than the injection rate, which may lead to an undesirable phase transition in the injection well. However, the liquid CO₂ and collected gas form a mixture having a density ρₘᵢₓ lower than ρ_{CO2} and higher than ρᵣₑₛ and having a pressure P₂ lower than P₃ and P₁. This reduces the rate at which the liquid CO₂ falls into the subterranean receiving reservoir and avoids the risk of phase transition in the well and associated damage. All pressures mentioned in the present disclosure are hydrostatic pressures. Once in the reservoir, the CO₂ may transition to a vapor phase due to the relatively high temperature of the reservoir. As the pressure of the reservoir increases over time, the injected CO₂ may once again be present in the liquid or supercritical state in the reservoir.

In other terms, the lower density ρₘᵢₓ of the mixture results in a lower mass of the mixture compared to that of the liquid CO₂, reducing the effect of drag and thereby reducing the cooling effect as the receiving injection well injects the mixture into the reservoir. The reduction in temperature drop may vary depending on the pressure and depth of the reservoir. The temperature drop may, for example, be measured anywhere between the entry to the receiving injection well and the end of the receiving injection well. Without mixing the CO₂ with the collected gas, a typical temperature drop of the CO₂ may be, for example, between -30°C and -60°C. However, owing to the mixing of the CO₂ with the collected gas, the temperature drop (if present) may instead be reduced, for example, to between -40°C and 0°C.

The mixture may have a pressure at the head of the receiving injection well. The high density of the CO₂, ρ_{CO2}, compared to that of the collected gas, ρᵣₑₛ, may result in a gravity induced flow that enables the influx of the mixture into the reservoir. The pressure P₄ at the outlet of the receiving injection well may be higher than the pressure P₅ at the inlet of the production well.

According to an embodiment, the (subterranean source/receiving reservoir) 102 may comprise more than one source/receiving injection well and/or more than one production well. An additional source/receiving injection well, for example, may receive (preferably liquid) CO₂ from a different source than that supplied to the first source/receiving injection well 101. Additionally or alternatively, an additional source/receiving injection well may receive a supply of collected gas from an additional production well connected to the same source/receiving injection reservoir 102 as the first production well 104.

In some variations, gas collected from one production well may be distributed to more than one injection well. In other variations, gas collected from more than one production well may be combined and supplied to one injection well.

### Linked Reservoirs

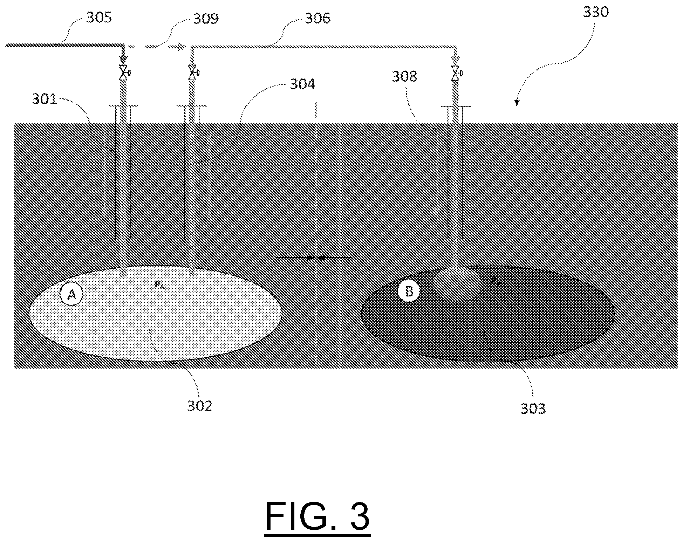

Referring to an embodiment as illustrated in FIG. 3, the subterranean source reservoir 302 and the subterranean receiving reservoir 303 may be different reservoirs within a subterranean formation, or different reservoirs in different subterranean formations. A source injection well 301 may be provided in the subterranean source reservoir, and a receiving injection well 308 may be provided in the subterranean receiving reservoir: in this case, these may thus be different injection wells. At least one production well 304 may be provided in the subterranean source reservoir 302.

CO₂ may be injected into the subterranean source reservoir 302 *via* the source injection well 301, gas may be collected from the subterranean source reservoir 302 *via* the production well 304, and then injected into the subterranean receiving reservoir 303 *via* the receiving injection well 308.

The gas collected from the subterranean source reservoir 302 may comprise CO₂ and/or hydrocarbons such as, for example, methane, ethane, propane and/or heavier hydrocarbons. The collected gas may also comprise impurities such as, for example, H₂S and/or mercaptans. In some variations, the collected gas comprises methane and/or CO₂. The composition of the collected gas may vary over time since additional CO₂ is progressively injected into the subterranean source reservoir 302. As a result, the proportion of CO₂ in the collected gas may increase over time. In some variations, the collected gas consists essentially of CO₂.

The collected gas from the subterranean source reservoir 302 may mostly comprise CO₂. The remaining part may be a natural gas that is a mix of hydrocarbons such as, for example, methane, ethane, and/or propane and/or heavier hydrocarbons and/or impurities such as, for example, H₂S and/or mercaptans.

A CO₂ feeding line 305 may deliver a supply of CO₂ in the form of a vapor or liquid or a supercritical fluid to the head of the source injection well 301. The source injection well 301 may inject CO₂ into the subterranean source reservoir 302, causing a pressure increase in the reservoir 302. The pressure increase within the subterranean source reservoir 302 may for example, lie between 10 MPa and 40 MPa. The subterranean source reservoir 302 may heat the injected CO₂. The temperature increase of the CO₂ in the subterranean source reservoir 302 may, for example, lie between 50 ⁰C and 200 ⁰C.

When the pressure P_{A} of the subterranean source reservoir 302 reaches a value higher than that of the pressure P_{B} of the subterranean receiving reservoir 303 (for example, when P_{A} is of a value greater than 10 MPa), the production well 304 may collect gas from the subterranean source reservoir 302 (preferably including heated CO₂) and supply it to a gas transfer line 306 which may transfer the gas to the head of the receiving injection well 308. The receiving injection well 308 may inject the CO₂ into the subterranean receiving reservoir 303.

The pressure difference between P_{A} and P_{B} may vary over time. Initially, at the start of injection into the subterranean source reservoir 302, the difference in pressure may be limited. As injection into the source reservoir continues, the pressure difference will increase. With a high enough difference in pressure between P_{A} and P_{B}, the collected gas from the subterranean source reservoir 302 may start to flow into the subterranean receiving reservoir 303 *via* the production well 304, the gas transfer line 306 and the receiving injection well 308.

Additionally, and as previously mentioned, as the pressure of the source reservoir increases, the CO₂ may once again form a liquid or establish a supercritical state. A reservoir pressure that is high enough will enable the CO₂ to remain in this phase.

In some variations, an embodiment according to the closed loop method may be implemented as a first step for increasing the pressure of a subterranean reservoir. Once the pressure of this reservoir is sufficiently higher than that of an identified subterranean receiving reservoir (for example, at a value at or above 7 MPa, or at or above 10 MPa, such as between 10 MPa and 70 MPa), an embodiment according to the linked reservoir method may be implemented as a second step, wherein the single reservoir used in the closed loop step becomes the source reservoir for the linked reservoirs step. Alternatively, the method may be directly carried out according to the linked reservoirs embodiment without any prior step according to the closed loop reservoir, especially when the initial pressure of the source reservoir is sufficiently high, for example at least 10 MPa.

An additional CO₂ feeding line 309 may be connected to the gas transfer line 306 and/or to the head of the receiving injection well 308. Additional CO₂ (in the gas, liquid or supercritical state) may thus be provided and mixed with the collected gas to form a mixture. This may occur, for example, along the gas transfer line 306 and/or at the well head of the receiving injection well 308 and/or along the receiving injection well 308. The gas transfer line 306 may transfer the mixture to the head of a receiving injection well 308. The receiving injection well 308 may inject the mixture into the subterranean receiving reservoir 303. In some variations, the additional CO₂ feeding line 309 may be a branch of the CO₂ feeding line 305. The additional CO₂ feeding line 309 may be used once the pressure of the subterranean receiving reservoir has reached a value high enough to ensure that a phase transition of liquid CO₂ in the receiving injection well 308 does not occur.

As a result, in some variations, the injection of CO₂ into the subterranean source reservoir 302 is carried out simultaneously with the collection of gas from the production well 304 in the subterranean source reservoir 302 and the injection of the collected gas into the subterranean receiving reservoir 303.

In other variations, the method comprises a first stage of injecting CO₂ into the subterranean source reservoir 302 (without collecting gas from the production well 304) followed by a second stage taking place, for example, one or two days later, of collecting gas from the production well 304 in the subterranean source reservoir 302 and injecting it into the subterranean receiving reservoir 303. In some cases, during this second stage, the injection of CO₂ into the subterranean source reservoir 302 may be continued. In other cases, during this second stage, the injection of CO₂ into the subterranean source reservoir 302 may be discontinued.

In some variations, the method comprises sequential, concomitant and/or alternated stages of injecting CO₂ into the subterranean source reservoir 302, and of collecting gas from the subterranean source reservoir 302 and injecting it into the subterranean receiving reservoir 303.

According to an embodiment, the subterranean source reservoir 302 may comprise more than one source injection well 301 and/or more than one production well 304. The subterranean receiving reservoir 303 may comprise more than one receiving injection well 305.

In some variations, gas collected from one production well may be distributed to more than one receiving injection well. In other variations, gas collected from more than one production well may be combined and supplied to one receiving injection well. In some variations, there is more than one source injection well and a single production well, or more than one production well and a single source injection well.

According to another embodiment, a subterranean receiving reservoir may also comprise a production well, an outlet of the production well connecting to a gas transfer line that may transfer collected gas to the inlet of a receiving injection well of another subterranean receiving reservoir. The subterranean receiving reservoir, in this instance, may act as a new subterranean source reservoir. A plurality of subterranean receiving reservoirs may fluidly connect in this manner to form a chain of subterranean receiving reservoirs.

For example, gas may be collected from a subterranean source reservoir and supplied to a first subterranean receiving reservoir as described above. Gas may be collected from the first subterranean receiving reservoir (which then also acts as a subterranean source reservoir) and supplied to a second subterranean receiving reservoir. Optionally, gas may be collected from the second subterranean receiving reservoir (which then also acts as a subterranean source reservoir) and supplied to a third subterranean receiving reservoir, and so on.

The plurality of subterranean receiving reservoirs may be fluidly connected in series by respective gas transfer lines, each gas transfer line being connected at the outlet of a production well of a subterranean receiving reservoir and at the inlet of an injection well of a next subterranean receiving reservoir in the series. Optionally, additional CO₂ may be provided to one or more, or all, of the subterranean receiving reservoirs, *via* respective additional CO₂ feeding lines, as described above.

In other variations, gas may be collected from one reservoir (for example the subterranean source reservoir, or possibly a subterranean receiving reservoir) and directly supplied to more than one other subterranean receiving reservoir. In this case, the reservoirs are connected in parallel. For instance, gas may be collected from one reservoir (for example the subterranean source reservoir, or possibly a subterranean receiving reservoir) *via* a single production well; a plurality of gas transfer lines may be fluidically connected to the outlet of the production well and may feed collected gas to respective receiving injection wells in respective subterranean receiving reservoirs. Alternatively, gas may be collected from one reservoir (for example the subterranean source reservoir, or possibly a subterranean receiving reservoir) *via* a plurality of production wells; respective gas transfer lines may be fluidically connected to the outlets of the respective production wells and feed collected gas to respective receiving injection wells in respective subterranean receiving reservoirs.

The subterranean formation(s) may be offshore, for example, a distance of 10-300km from the mainland. This is, for example the case for such a subterranean formation in the North Sea. The subterranean source reservoir may be closer to the mainland than the subterranean receiving reservoirs(s). For example, in considering a chain of reservoirs, the first reservoir in the chain may be the subterranean source reservoir. The subterranean source reservoir may be the closest of the chain of reservoirs to the mainland (or may be on the mainland). Gas may be collected from the subterranean source reservoir as described above and supplied to one or more subterranean receiving reservoirs distant from the mainland and/or more remote from the mainland than the subterranean source reservoir.

## Claims

1. A method for subterranean CO₂ storage, the method comprising:
- collecting gas from a subterranean source reservoir (102, 202, 302),
- injecting the collected gas into a subterranean receiving reservoir (102, 202, 303),
wherein the subterranean source reservoir and the subterranean receiving reservoir are the same reservoir,
wherein the collected gas and CO₂ are mixed to obtain a mixture, and the mixture is then injected into the subterranean source reservoir.

2. The method according to claim 1, wherein the subterranean receiving reservoir has an initial pressure between 2 MPa and 7 MPa.

3. The method according to claim 1 or 2, wherein the subterranean source reservoir has an initial pressure between 2 MPa and 7 MPa.

4. The method according to any one of claims 1 to 3, where the CO₂ injected into the subterranean source reservoir is in the form of liquid CO₂.

5. The method according to any one of claims 1 to 4, wherein the collected gas heats the CO₂ during injection into the subterranean source reservoir.

6. The method according to any one of claims 1 to 5, comprising a step of compressing the collected gas before mixing it with the CO₂.

7. The method according to any one of claims 1 to 6, wherein the collected gas comprises hydrocarbons.

8. The method according to claim 1, wherein:
- in a first stage, the method comprises:
o collecting gas from a first reservoir,
o injecting the collected gas into the first reservoir,
o wherein the collected gas and CO₂ are mixed to obtain a mixture, and the mixture is then injected into the first reservoir;
- in a second stage, the method comprises:
o collecting gas from the first reservoir,
o injecting the collected gas into a second reservoir different from the first reservoir,
o wherein CO₂ is injected into the first reservoir.

9. The method according to claim 8, wherein the first stage is carried out until the first reservoir reaches a target pressure, and then the second stage is carried out, the target pressure being preferably at or above 7 MPa, or at or above 10 MPa, such as between 10 MPa and 70 MPa.

10. The method according to claim 8 or 9, wherein, in the first stage, the method is carried out according to any one of claims 1 to 7.

11. The method according to any one claims 8 to 10, wherein, in the second stage, the method comprises, sequentially, injecting CO₂ into the first reservoir, and then starting to collect gas from the first reservoir and to inject the collected gas into the second reservoir; and, preferably, the step of injecting CO₂ into the first reservoir is continued during the steps of collecting gas from the first reservoir and injecting the collected gas into the second reservoir.

12. The method according to any one of claims 8 to 11, wherein, in the second stage, the method comprises mixing additional CO₂ with the collected gas to obtain a mixture, and injecting the mixture into the second reservoir.

13. An installation for CO₂ storage, the installation comprising:
- at least one source injection well (101, 201, 301) in a subterranean source reservoir (102, 202, 302);
- at least one receiving injection well (101, 201, 308) in a subterranean receiving reservoir (102, 202, 303) wherein the subterranean source reservoir and the subterranean receiving reservoir are the same reservoir;
- at least one production well (104, 204, 304) in a subterranean source reservoir configured for collecting gas;
- a CO₂ feeding line (105, 205, 305) connected to the source injection well, configured for supplying CO₂ to the source injection well;
- a gas transfer line (106, 306) connected from the production well to the receiving injection well, configured for transferring collected gas from the production well to the receiving injection well;
wherein the installation is configured for mixing the collected gas and the CO₂ in or upstream of the source injection well and then injecting the mixture into the subterranean source reservoir.

14. The installation according to claim 13, wherein the source injection well and the receiving injection well are the same injection well.

15. The installation according to claim 13 or 14, comprising a compressor (107) on the gas transfer line.

## Patentansprüche

1. Verfahren zur unterirdischen CO₂-Speicherung, wobei das Verfahren Folgendes umfasst:
- Sammeln von Gas aus einem unterirdischen Quellreservoir (102, 202, 302),
- Einspritzen des gesammelten Gases in ein unterirdisches Aufnahmereservoir (102, 202, 303),
wobei das unterirdische Quellreservoir und das unterirdische Aufnahmereservoir dasselbe Reservoir sind,
wobei das gesammelte Gas und das CO₂ gemischt werden, um ein Gemisch zu erhalten, und das Gemisch dann in das unterirdische Quellreservoir eingespritzt wird.

2. Verfahren nach Anspruch 1, wobei das unterirdische Aufnahmereservoir einen Anfangsdruck zwischen 2 MPa und 7 MPa aufweist.

3. Verfahren nach Anspruch 1 oder 2, wobei das unterirdische Quellreservoir einen Anfangsdruck zwischen 2 MPa und 7 MPa aufweist.

4. Verfahren nach einem der Ansprüche 1 bis 3, wobei das in das unterirdische Quellreservoir eingespritzte CO₂ in Form von flüssigem CO₂ vorliegt.

5. Verfahren nach einem der Ansprüche 1 bis 4, wobei das gesammelte Gas das CO₂ während der Einspritzung in das unterirdische Quellreservoir erwärmt.

6. Verfahren nach einem der Ansprüche 1 bis 5, das einen Schritt des Komprimierens des gesammelten Gases vor dem Mischen mit dem CO₂ umfasst.

7. Verfahren nach einem der Ansprüche 1 bis 6, wobei das gesammelte Gas Kohlenwasserstoffe umfasst.

8. Verfahren nach Anspruch 1, wobei:
- das Verfahren in einer ersten Stufe Folgendes umfasst:
o Sammeln von Gas aus einem ersten Reservoir,
o Einspritzen des gesammelten Gases in das erste Reservoir,
o wobei das gesammelte Gas und das CO₂ gemischt werden, um ein Gemisch zu erhalten, und das Gemisch dann in das erste Reservoir eingespritzt wird;
- das Verfahren in einer zweiten Stufe Folgendes umfasst:
o Sammeln von Gas aus dem ersten Reservoir,
o Einspritzen des gesammelten Gases in ein zweites Reservoir, das sich vom ersten Reservoir unterscheidet,
o wobei CO₂ in das erste Reservoir eingespritzt wird.

9. Verfahren nach Anspruch 8, wobei die erste Stufe durchgeführt wird, bis das erste Reservoir einen Zieldruck erreicht, und dann die zweite Stufe durchgeführt wird, wobei der Zieldruck vorzugsweise bei oder über 7 MPa oder bei oder über 10 MPa, beispielsweise zwischen 10 MPa und 70 MPa, liegt.

10. Verfahren nach Anspruch 8 oder 9, wobei in der ersten Stufe das Verfahren nach einem der Ansprüche 1 bis 7 durchgeführt wird.

11. Verfahren nach einem der Ansprüche 8 bis 10, wobei das Verfahren in der zweiten Stufe nacheinander das Einspritzen von CO₂ in das erste Reservoir und dann das Beginnen des Sammelns von Gas aus dem ersten Reservoir und das Einspritzen des gesammelten Gases in das zweite Reservoir umfasst; und wobei vorzugsweise der Schritt des Einspritzens von CO₂ in das erste Reservoir während der Schritte des Sammelns von Gas aus dem ersten Reservoir und des Einspritzens des gesammelten Gases in das zweite Reservoir fortgesetzt wird.

12. Verfahren nach einem der Ansprüche 8 bis 11, wobei das Verfahren in der zweiten Stufe das Mischen von zusätzlichem CO₂ mit dem gesammelten Gas zum Erhalt eines Gemisches und das Einspritzen des Gemisches in das zweite Reservoir umfasst.

13. Anlage zur CO₂-Speicherung, wobei die Anlage Folgendes umfasst:
- mindestens eine Quelleinspritzbohrung (101, 201, 301) in einem unterirdischen Quellreservoir (102, 202, 302);
- mindestens eine Aufnahmeeinspritzbohrung (101, 201, 308) in einem unterirdischen Aufnahmereservoir (102, 202, 303), wobei das unterirdische Quellreservoir und das unterirdische Aufnahmereservoir dasselbe Reservoir sind;
- mindestens eine Förderbohrung (104, 204, 304) in einem unterirdischen Quellreservoir, das zum Sammeln von Gas konfiguriert ist;
- eine CO₂-Zufuhrleitung (105, 205, 305), die mit der Quelleinspritzbohrung verbunden ist und zur Zufuhr von CO₂ zur Quelleinspritzbohrung konfiguriert ist;
- eine Gasübertragungsleitung (106, 306), die von der Förderbohrung zur Aufnahmeeinspritzbohrung verbunden ist und zum Übertragen von gesammeltem Gas von der Förderbohrung zur Aufnahmeeinspritzbohrung konfiguriert ist;
wobei die Anlage dazu konfiguriert ist, das gesammelte Gas und das CO₂ in oder stromaufwärts der Quelleinspritzbohrung zu mischen und das Gemisch dann in das unterirdische Quellreservoir einzuspritzen.

14. Anlage nach Anspruch 13, wobei die Quelleinspritzbohrung und die Aufnahmeeinspritzbohrung dieselbe Einspritzbohrung sind.

15. Anlage nach Anspruch 13 oder 14, die einen Kompressor (107) an der Gasübertragungsleitung umfasst.

## Revendications

1. Procédé de stockage souterrain de CO₂, le procédé comprenant :
- la collecte d'un gaz à partir d'un réservoir source souterrain (102, 202, 302),
- l'injection du gaz collecté dans un réservoir récepteur souterrain (102, 202, 303),
dans lequel le réservoir source souterrain et le réservoir récepteur souterrain sont le même réservoir,
dans lequel le gaz collecté et le CO₂ sont mélangés pour obtenir un mélange, et le mélange est ensuite injecté dans le réservoir source souterrain.

2. Procédé selon la revendication 1, dans lequel le réservoir récepteur souterrain présente une pression initiale comprise entre 2 MPa et 7 MPa.

3. Procédé selon la revendication 1 ou 2, dans lequel le réservoir source souterrain présente une pression initiale comprise entre 2 MPa et 7 MPa.

4. Procédé selon l'une quelconque des revendications 1 à 3, dans lequel le CO₂ injecté dans le réservoir source souterrain est sous forme de CO₂ liquide.

5. Procédé selon l'une quelconque des revendications 1 à 4, dans lequel le gaz collecté chauffe le CO₂ lors de l'injection dans le réservoir source souterrain.

6. Procédé selon l'une quelconque des revendications 1 à 5, comprenant une étape de compression du gaz collecté avant de le mélanger avec le CO₂.

7. Procédé selon l'une quelconque des revendications 1 à 6, dans lequel le gaz collecté comprend des hydrocarbures.

8. Procédé selon la revendication 1, dans lequel :
- lors d'une première phase, le procédé comprend :
o la collecte d'un gaz à partir d'un premier réservoir,
o l'injection du gaz collecté dans le premier réservoir,
o dans lequel le gaz collecté et le CO₂ sont mélangés pour obtenir un mélange, et le mélange est ensuite injecté dans le premier réservoir ;
- lors d'une deuxième phase, le procédé comprend :
o la collecte d'un gaz à partir du premier réservoir,
o l'injection du gaz collecté dans un deuxième réservoir différent du premier réservoir,
o dans lequel du CO₂ est injecté dans le premier réservoir.

9. Procédé selon la revendication 8, dans lequel la première phase est mise en œuvre jusqu'à ce que le premier réservoir atteigne une pression cible, et ensuite la deuxième phase est mise en œuvre, la pression cible étant de préférence supérieure ou égale à 7 MPa, ou supérieure ou égale à 10 MPa, par exemple comprise entre 10 MPa et 70 MPa.

10. Procédé selon la revendication 8 ou 9, dans lequel, lors de la première phase, le procédé est mis en œuvre selon l'une quelconque des revendications 1 à 7.

11. Procédé selon l'une quelconque des revendications 8 à 10, dans lequel, lors de la deuxième phase, le procédé comprend, de manière séquentielle, l'injection de CO₂ dans le premier réservoir, et ensuite le démarrage de la collecte de gaz à partir du premier réservoir et de l'injection du gaz collecté dans le deuxième réservoir ; et, de préférence, l'étape d'injection de CO₂ dans le premier réservoir est poursuivie pendant les étapes de collecte du gaz à partir du premier réservoir et d'injection du gaz collecté dans le deuxième réservoir.

12. Procédé selon l'une quelconque des revendications 8 à 11, dans lequel, lors de la deuxième phase, le procédé comprend le mélange de CO₂ supplémentaire avec le gaz collecté pour obtenir un mélange, et l'injection du mélange dans le deuxième réservoir.

13. Installation de stockage de CO₂, l'installation comprenant :
- au moins un puits d'injection source (101, 201, 301) dans un réservoir source souterrain (102, 202, 302) ;
- au moins un puits d'injection récepteur (101, 201, 308) dans un réservoir récepteur souterrain (102, 202, 303) dans lequel le réservoir source souterrain et le réservoir récepteur souterrain sont le même réservoir ;
- au moins un puits de production (104, 204, 304) dans un réservoir source souterrain configuré pour collecter un gaz ;
- une conduite d'alimentation en CO₂ (105, 205, 305) raccordée au puits d'injection source, configurée pour fournir du CO₂ au puits d'injection source ;
- une conduite de transfert de gaz (106, 306) raccordée du puits de production au puits d'injection récepteur, configurée pour transférer le gaz collecté du puits de production au puits d'injection récepteur ;
l'installation étant configurée pour mélanger le gaz collecté et le CO₂ dans ou en amont du puits d'injection source et ensuite injecter le mélange dans le réservoir source souterrain.

14. Installation selon la revendication 13, dans laquelle le puits d'injection source et le puits d'injection récepteur sont le même puits d'injection.

15. Installation selon la revendication 13 ou 14, comprenant un compresseur (107) sur la conduite de transfert de gaz.
